# EUROPEAN PATENT SPECIFICATION

(11) **EP 2 700 534 B1**
(45) Date of publication and mention of the grant of the patent: **18.04.2018**
(21) Application number: 11863750.3
(22) Date of filing: 22.04.2011
(51) Int. Cl.: B60M 3/00, H02J 7/34

(54) **CHARGING APPARATUS**
LADEGERÄT
APPAREIL DE CHARGE

(43) Date of publication of application: 26.02.2014
(73) Proprietor: Mitsubishi Electric Corporation, Tokyo 100-8310 (JP)
(72) Inventor: ISHIKURA, Syuji, Tokyo 102-0073 (JP); HATANAKA, Keita, Tokyo 100-8310 (JP); KITANAKA, Hidetoshi, Tokyo 100-8310 (JP); MATSUMURA, Yasushi, Tokyo 100-8310 (JP)
(74) Representative: Zech, Stefan Markus
(86) International application number: PCT/JP2011/059983
(87) International publication number: WO 2012/144079

(56) References cited:
- WO-A1-2007/091371
- JP-A- 2003 220 859
- JP-A- 2003 220 859
- JP-A- 2004 328 928
- JP-A- 2006 232 102
- JP-A- 2009 067 205
- US-A1- 2010 202 161

## Description

### Field

The present invention relates to a charging apparatus that charges a power storage device incorporated in a vehicle.

### Background

A conventional charging apparatus that charges a power storage device incorporated in a vehicle is configured so that power required for rapidly charging the power storage device is supplied from a power supply facility installed on the ground. For example, in a traffic system described in Patent Literature 1, an alternating-current (AC) circuit breaker, a transformer for a rectifier, a rectifier, an electric double-layer capacitor, a chopper circuit, and a direct-current circuit (DC) breaker are provided on a ground side. The AC circuit breaker that is connected to a power system of a power company is closed, AC power is converted by the rectifier into DC power to charge the electric double-layer capacitor (a power storage device on the ground side), and the DC circuit breaker placed between the electric double-layer capacitor and an electric vehicle is closed, thereby discharging the power in the electric double-layer capacitor to charge an electric double-layer capacitor incorporated in the electric vehicle (a power storage device on a vehicle side).

### Citation List

### Patent Literature

Patent Literature 1: Japanese Patent Application Laid-open No. 2006-232102

WO 2007/091371 A1 discloses a charging apparatus with power storage device, DC/DC converter, and control unit.

### Summary

### Technical Problem

As described above, the conventional charging apparatus that charges the power storage device incorporated in the vehicle is configured to switch between charging/discharging controls by closing and opening of the AC circuit breaker and the DC circuit breaker. Particularly when the power storage device on the vehicle side is to be charged, it is necessary to perform rapid charging with a large current and in a short time because of time constraints and thus the large current flows in a charging path. Therefore, an expensive DC circuit breaker with high performance needs to be selected and there is a problem that the cost and the size of the apparatus are increased.

Further, in this charging apparatus, because at least closing and opening of the DC circuit breaker needs to be controlled each time the respective power storage devices on the ground side and on the vehicle side are charged, it is difficult to extend the lifetime of the DC circuit breaker. This leads to reduction in reliability of the whole apparatus and also the maintenance cost is increased.

The present invention has been achieved in view of the above problems, and an object of the present invention is to provide a charging apparatus that can achieve further downsizing, lightening, and cost reduction, and higher reliability of the apparatus.

### Solution to Problem

In order to solve above-mentioned problems and achieve the object, a charging apparatus according to the present invention is defined in independent claim 1. It includes a power receiving unit that includes a rectifier at an output stage, receives AC power, and converts the AC power into DC power; a power storage device that has DC power stored therein; a DC/DC converter that can execute a bidirectional power-flow control including a control of charging to the power storage device and a control of discharging from the power storage device using an output of the rectifier; and a control unit that controls operations of the power receiving unit and the DC/DC converter, wherein an output voltage of the rectifier is set different from an output voltage of the DC/DC converter that is applied to an output terminal of the rectifier when the power storage device is discharged. Advantageous Effects of Invention

According to the charging apparatus of the present invention, a DC circuit breaker can be omitted, and it is possible to realize further downsizing, and lightening, and cost reduction, and higher reliability of the apparatus.

### Brief Description of Drawings

FIG. 1 is a configuration example of a power supply system that includes a charging apparatus according to a first embodiment.
FIG. 2 is a configuration example of an electric vehicle according to the first embodiment.
FIG. 3 is an example of a charging/discharging pattern of a power storage device according to the first embodiment.
FIG. 4 is a configuration example of a control unit according to the first embodiment.
FIG. 5 is a configuration example of a DC/DC-converter control unit shown in FIG. 4.
FIG. 6 is an example of a charging/discharging pattern of a power storage device according to a second embodiment. Description of Embodiments

A charging apparatus and a power supply system according to embodiments of the present invention will be explained below in detail with reference to the accompanying drawings. The present invention is not limited to the embodiments.

### First embodiment.

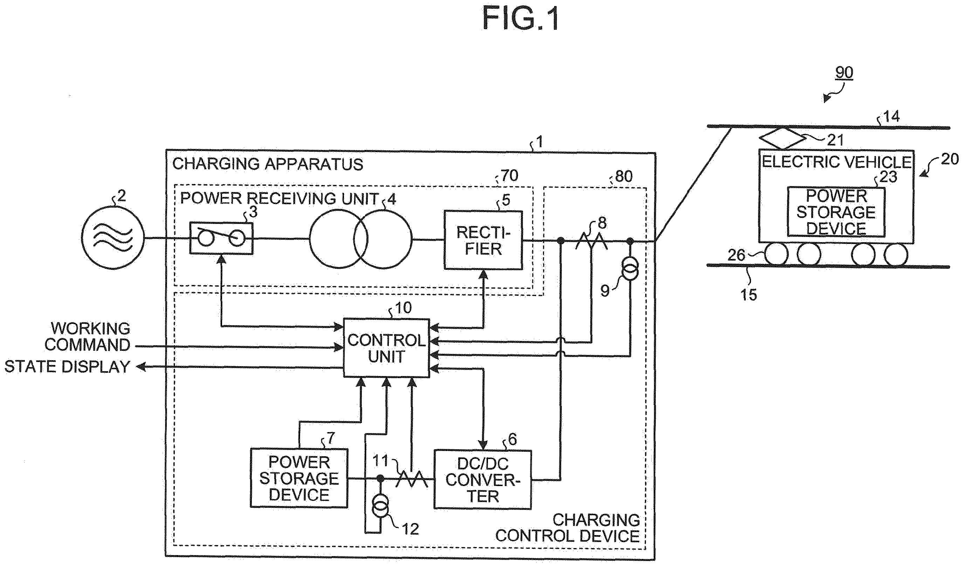

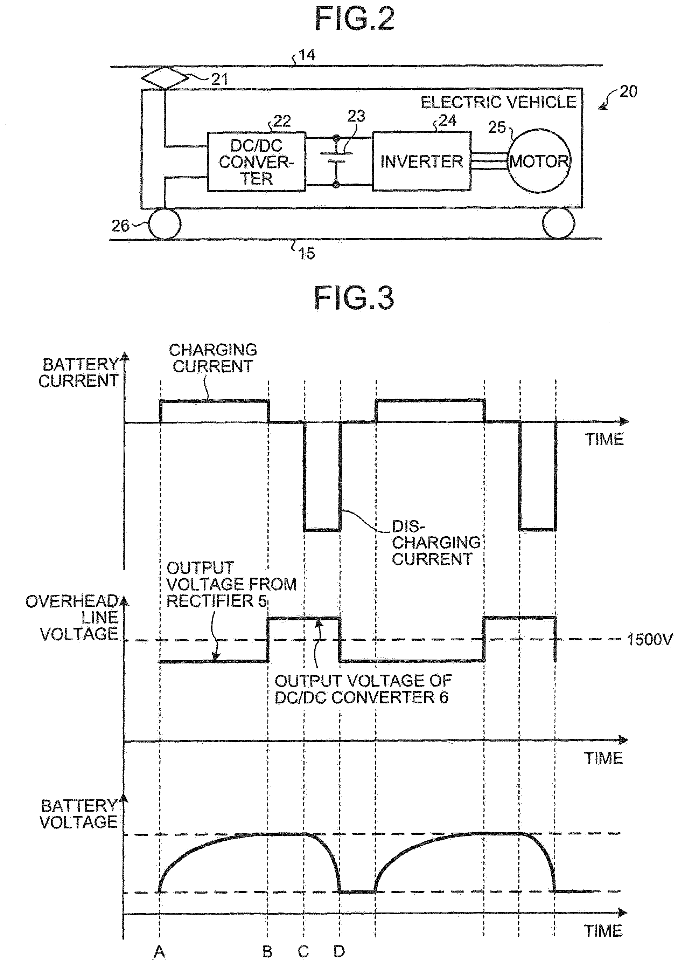

FIG. 1 is a configuration example of a power supply system that includes a charging apparatus according to a first embodiment. FIG. 2 is a configuration example of an electric vehicle according to the first embodiment.

In FIG. 1, a charging apparatus 1 is configured as an apparatus that is installed in, for example, a station or a rail yard, uses AC power 2 received from a power company as an input power supply, and charges a power storage device 23 incorporated in an electric vehicle 20 that is stopped at a station or the rail yard.

The charging apparatus 1 includes a power receiving unit 70 and a charging control device 80. The power receiving unit 70 includes an AC circuit breaker 3, a transformer 4, and a rectifier 5, and receives the AC power 2 and converts it into DC power. The charging control device 80 includes a DC/DC converter 6, a power storage device 7, a first current detector 8, a first voltage detector 9, a control unit 10, a second current detector 11, and a second voltage detector 12.

The AC circuit breaker 3 inputs or interrupts the received AC power 2. The transformer 4 steps down an AC voltage that is input via the AC circuit breaker 3 to a predetermined AC voltage. The rectifier 5 converts an AC voltage (AC power) into a predetermined DC voltage (DC power). The power storage device 7 stores therein DC power.

The first current detector 8 detects an output current of the rectifier 5, and the first voltage detector 9 detects an output voltage of the rectifier 5. The second current detector 11 detects an output current of the DC/DC converter 6, and the second voltage detector 12 detects an output voltage of the power storage device 7.

The DC/DC converter 6 is a bidirectional DC/DC converter that can execute a bidirectional power-flow control, and executes a control of charging the power storage device 7 using the DC power converted by the rectifier 5. The output current of the rectifier 5 detected by the first current detector 8, the output voltage of the rectifier 5 detected by the first voltage detector 9, the output current of the DC/DC converter 6 detected by the second current detector 11, the output voltage of the power storage device 7 detected by the second voltage detector 12, an external operation command, and information about the power storage device 7 (for example, information about a charging state of the power storage device (State Of Charge, hereinafter "SOC") and information of a temperature of the power storage device or around the power storage device) are input to the control unit 10. Further, state information of the AC circuit breaker 3, the rectifier 5, the DC/DC converter 6, and the like is input to the control unit 10. The control unit 10 controls the rectifier 5, the DC/DC converter 6, and the AC circuit breaker 3 using these pieces of information.

A vehicle system 90 includes an overhead line 14, a rail 15, and the electric vehicle 20. The electric vehicle 20 includes the power storage device 23, a DC/DC converter 22, an inverter 24, a motor 25, a pantograph 21, and wheels 26 (FIG. 2). The DC power supplied by the charging apparatus 1 is supplied to the electric vehicle 20. In the electric vehicle 20, a charging circuit is formed by the overhead line 14, the DC/DC converter 22, the wheels 26, and the rail 15 via the pantograph 21. The DC/DC converter 22 charges the power storage device 23 using the DC power received via the overhead line 14 and the pantograph 21. When charging of the power storage device 23 is completed, the pantograph 21 is lowered and the inverter 24 converts the DC power of the power storage device 23 into desired AC power to drive the motor 25 and rotate the wheels 26, whereby the electric vehicle 20 runs.

Of the charging apparatus 1 and the vehicle system 90 explained above, the power supply system according to the first embodiment includes the charging apparatus 1, and the overhead line 14 and the rail 15 that constitute a part of the vehicle system 90.

While a conductor that constitutes the overhead line 14 is shown by a line in FIGS. 1 and 2, a plurality of parallel conductors preferably constitute the overhead line 14. When the parallel conductors constitute the overhead line 14, a resistance value of the overhead line 14 can be reduced. Therefore, a loss during charging can be reduced and further energy saving and higher efficiency of the charging apparatus 1 can be achieved.

Next, a start-up operation, a charging control, and a discharging control of the charging apparatus 1 are explained with reference to FIGS. 1 and 2.

### (Start-up operation)

When an external operation command is input to the control unit 10, the control unit 10 closes the AC circuit breaker 3. When the AC circuit breaker 3 is closed, the AC power 2 is supplied to the transformer 4. The transformer 4 steps down the input AC voltage to supply AC power to the rectifier 5. The rectifier 5 converts the input AC power into DC power and outputs it to the overhead line 14. When recognizing that an output voltage of the rectifier 5 has been increased to a predetermined voltage based on an output of the first voltage detector 9 and that the voltage of the power storage device 7 is in a predetermined range based on an output of the second voltage detector 12, the control unit 10 starts a control of the DC/DC converter 6. With the operation explained above, the charging apparatus 1 starts.

### (Charging control)

When the charging apparatus 1 starts, the control unit 10 starts a charging control on the power storage device 7. The control unit 10 controls a charging current supplied to the power storage device 7 by the DC/DC converter 6 to charge the power storage device 7. At the time of executing the charging control, when charging is performed with a smaller current and in a longer time as compared to discharging, device capacities of the rectifier 5, the transformer 4, and the AC circuit breaker 3 can be reduced and also the amount of power contracted with the power company can be reduced, thereby reducing the cost. The control unit 10 determines a charging state of the power storage device 7 based on voltage information and/or SOC information of the power storage device 7. When determining that the power storage device 7 is in a full charge state, the control unit 10 switches the DC/DC converter 6 from the charging control state to a discharging control state, more specifically, to a discharging-controllable state. The SOC information of the power storage device 7 can be estimated by the control unit 10 without being received from the power storage device 7.

### (Discharging control)

When the DC/DC converter 6 is in a discharging-controllable state, the DC/DC converter 6 boosts up the voltage of the power storage device 7 to a predetermined voltage and applies the boosted voltage to the overhead line 14. At this time, an output voltage of the DC/DC converter 6 is higher than an output voltage of the rectifier 5. Therefore, a voltage higher than the output voltage of the rectifier 5 (that is obtained by converting an AC voltage into a DC voltage) is applied to an output side of the rectifier 5. An output current from the rectifier 5 is thus blocked by a unidirectional conducting element (for example, a diode) that constitutes the rectifier 5 and stops. This discharging-controllable state continues until the electric vehicle 20 stops at a station or the rail yard and starts charging. When the electric vehicle 20 stops at a station or the rail yard and starts charging, the power of the power storage device 7 is then supplied from the DC/DC converter 6 and the power storage device 23 incorporated in the electric vehicle 20 is charged.

FIG. 3 is an example of a charging/discharging pattern of the power storage device 7 according to the first embodiment, and is a time chart that is suitable for chronologically explaining the operation that has been explained above.

In FIG. 3, a period from A to B is a charging control period and a period from B to D is a discharging-controllable period. In the discharging-controllable period from B to D, a period from B to C is a discharging waiting period and a period from C to D is a discharging control period. In the charging control period from A to B, an overhead line voltage (a voltage of the overhead line 14) is an output voltage of the rectifier 5 (for example, a predetermined voltage lower than a rated voltage of 1500 volts). The DC/DC converter 6 performs a step-down operation and the power storage device 7 is charged using the DC power supplied from the rectifier 5. At this time, a charging control (preferably, constant current charging) with a small current and in a longer time (the charging time is longer than the discharging time) as explained above is executed.

When the operation shifts from the charging control period from A to B to the discharging waiting period from B to C, that is, when the DC/DC converter 6 becomes a discharging-controllable state, the DC/DC converter 6 performs a boost-up operation and the overhead line voltage becomes an output voltage of the DC/DC converter 6 (for example, a predetermined voltage higher than the rated voltage of 1500 volts).

When the electric vehicle 20 stops at a station or the rail yard and starts charging, the operation shifts from the discharging waiting period from B to C to the discharging control period from C to D. The DC/DC converter 6 performs rapid discharging with a large current and in a short time. When discharging of the power storage device 7 starts, the output voltage of the DC/DC converter 6 is reduced. Accordingly, the DC/DC converter 6 executes a constant voltage control so that the output voltage is not reduced and becomes a predetermined voltage. After charging of the power storage device 23 incorporated in the electric vehicle 20 is completed, when an output voltage of the power storage device 7 is reduced and recharging is required as shown in FIG. 3, the DC/DC converter 6 stops the boost-up operation. Therefore, the overhead line voltage becomes the output voltage of the rectifier 5.

In the example of FIG. 3, the DC/DC converter 6 executes a control of stopping the boost-up operation after discharging of the power storage device 7 is completed and then a control of charging the power storage device 7. However, when reduction in the output voltage of the power storage device 7 is small and a discharging control can be executed again in this state, the DC/DC converter 6 can wait in the discharging-controllable state without reducing the output voltage thereof until the next electric vehicle 20 stops at a station or the rail yard and starts charging.

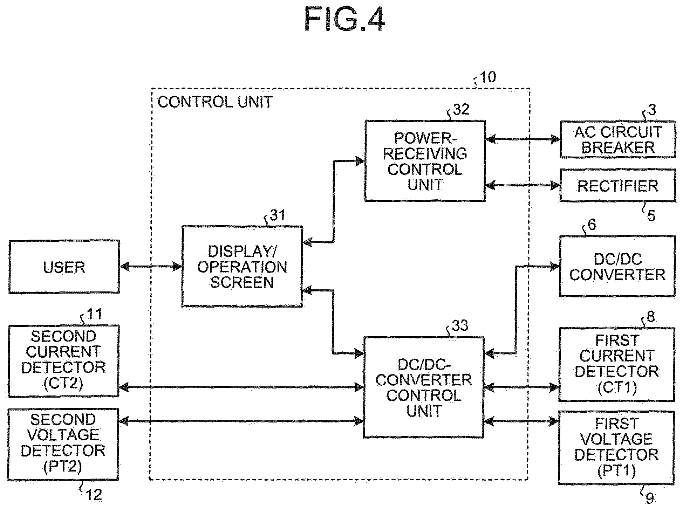

FIG. 4 is a configuration example of the control unit 10 according to the first embodiment. The control unit 10 includes a display/operation screen 31, a power-receiving control unit 32, and a DC/DC-converter control unit 33.

The display/operation screen 31 is a constituent unit that provides interfaces between a user (an operator of the charging apparatus 1) and the power-receiving control unit 32 and between the user and the DC/DC-converter control unit 33, and performs display of states of the respective devices (for example, the AC circuit breaker 3, the rectifier 5, and the DC/DC converter 6) and an operation input (for example, transmission of a operation command from the user).

The power-receiving control unit 32 controls working and stop of the AC circuit breaker 3 and the rectifier 5, and the like. The power-receiving control unit 32 receives state signals of the AC circuit breaker 3 and the rectifier 5 and transmits the signals to the display/operation screen 31.

The DC/DC-converter control unit 33 controls the DC/DC converter 6 based on detected currents of the first current detector 8 and the second current detector 11 and detected voltages of the first voltage detector 9 and the second voltage detector 12. Further, the DC/DC-converter control unit 33 receives a state signal of the DC/DC converter 6, monitors the detected currents of the first current detector 8 and the second current detector 11 and the detected voltages of the first voltage detector 9 and the second voltage detector 12, and transmits the respective state signals to the display/operation screen 31.

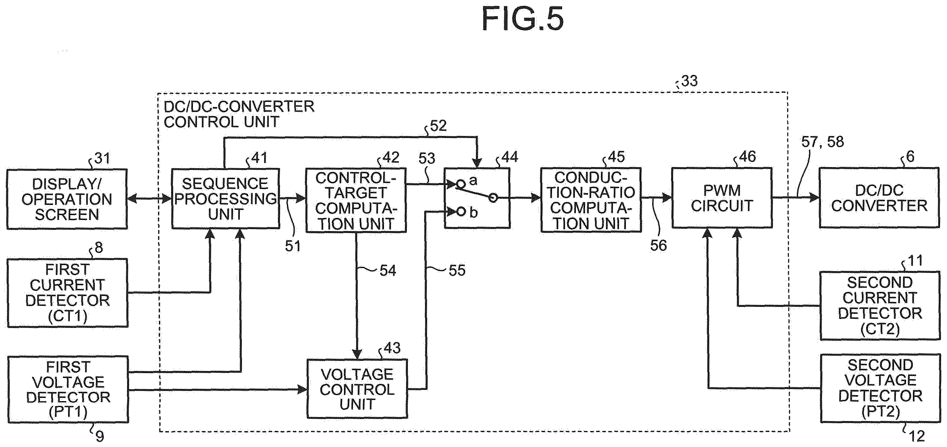

FIG. 5 is a configuration example of the DC/DC-converter control unit 33 shown in FIG. 4. The DC/DC-converter control unit 33 includes a sequence processing unit 41, a control-target computation unit 42, a voltage control unit 43, a control-system switching unit 44, a conduction-ratio computation unit 45, and a PWM circuit 46.

The sequence processing unit 41 generates an operation enable signal 51 based on a operation command that is input through the display/operation screen 31 and a detected voltage of the first voltage detector 9. The operation enable signal 51 is a signal that causes a charging control and a discharging control to be executable, and input to the control-target computation unit 42. The sequence processing unit 41 monitors the detected voltage of the first voltage detector 9 and generates the operation enable signal 51 after detecting that an output voltage has appeared in the rectifier 5.

The sequence processing unit 41 also generates a charging/discharging switching signal 52 based on a detected current of the first current detector 8. The charging/discharging switching signal 52 is a control-system switching signal and input to the control-system switching unit 44. More specifically, when the power storage device 7 of the charging apparatus 1 is to be charged (that is, when a charging control is to be executed), the control-system switching unit 44 is switched to an "a" side, so that the control-target computation unit 42 is connected to the conduction-ratio computation unit 45. When the power storage device 23 incorporated in the electric vehicle 20 is to be charged (that is, when a discharging control is to be executed), the control-system switching unit 44 is switched to a "b" side, so that the voltage control unit 43 is connected to the conduction-ratio computation unit 45. When the electric vehicle 20 is not stopped at a station or the rail yard, no current flows on an output side of the rectifier 5. Therefore, by monitoring the detected current of the first current detector 8, it is possible to determine a timing of switching from a discharging control system (a first control system: the "a" side of the switch) to a charging control system (a second control system: the "b" side of the switch) and a timing of switching from the charging control system to the discharging control system.

In the case of the charging control of charging the power storage device 7 of the charging apparatus 1, the control-target computation unit 42 generates a first current command 53 that is a command value of a charging current to the power storage device 7. On the other hand, in the case of the discharging control for charging the power storage device 23 incorporated in the electric vehicle 20, the control-target computation unit 42 generates a target voltage 54 that is a target value of an output voltage of the DC/DC converter 6 (for example, a voltage higher than the rated voltage of 1500 volts). The voltage control unit 43 is operated at the time of the discharging control, and generates a second current command 55 that is a command value of a current for maintaining the overhead line voltage at a constant value based on a difference between the target voltage 54 and the detected voltage of the first voltage detector 9.

The conduction-ratio computation unit 45 computes a conduction-ratio command 56 that is a command value of a conduction ratio to a switching element included in the DC/DC converter 6 by using the first current command 53 or the second current command 55 that is input via the control-system switching unit 44, and inputs the command to the PWM circuit 46. In the case of the charging control for charging the power storage device 7 of the charging apparatus 1, the PWM circuit 46 generates a PWM signal 57 that causes a detected current of the second current detector 11 to be a predetermined constant current to control the DC/DC converter 6. On the other hand, when the discharging control for charging the power storage device 23 incorporated in the electric vehicle 20 is executed, the PWM circuit 46 generates a PWM signal 58 that causes a detected voltage of the second voltage detector 12 to be a predetermined constant voltage to control the DC/DC converter 6.

As explained above, according to the charging apparatus of the first embodiment, when the power storage device 23 incorporated in the electric vehicle 20 is to be charged, an output voltage of the DC/DC converter 6 is set higher than that of the rectifier 5 to reversely apply a voltage to the rectifier 5, thereby stopping an output of the rectifier 5. With this configuration, the DC circuit breaker provided in the technology described in Patent Literature 1 can be omitted, and further downsizing, lightening, and cost reduction, and higher reliability of the apparatus can be achieved.

According to the charging apparatus of the first embodiment, because the output voltage of the DC/DC converter 6 is set higher than that of the rectifier 5 when preparation of the power storage device 7 incorporated in the charging apparatus 1 is completed, it is possible to determine whether the side of the charging apparatus 1 is in a discharging-controllable state only based on a level (a magnitude) of the overhead line voltage. According to the present embodiment, it is possible to determine the preparation state of the charging apparatus 1 from the electric vehicle 20 without providing a special interface between the charging apparatus 1 and the electric vehicle 20.

After the electric vehicle 20 enters a station or the rail yard by using the power of the power storage device 23 as a drive source with the pantograph 21 being lowered and stops, the pantograph 21 then can be raised to check the level (the magnitude) of the overhead line voltage, so that whether the side of the charging apparatus 1 is in the discharging-controllable state can be determined on the side of the electric vehicle 20.

According to the present embodiment, information of the overhead line voltage can be displayed on the display operation screen 31 of the control unit 10. Accordingly, when a display device that displays the information of the overhead line voltage is placed at a location where the display device can be viewed from a stop position of the electric vehicle 20, the electric vehicle 20 can determine the state of the charging apparatus 1 without executing a control of raising the pantograph 21.

According to the charging apparatus of the first embodiment, when the power storage device 23 incorporated in the electric vehicle 20 is to be charged, rapid discharging can be performed without opening the AC circuit breaker 3. Therefore, the lifetime of the AC circuit breaker 3 can be extended and higher reliability of the apparatus can be achieved.

Further, according to the charging apparatus of the first embodiment, in a case where charging of the power storage device 7 is not completed or where the SOC of the power storage device 7 has degraded when the electric vehicle 20 stops at a station or the rail yard, it is possible to stop the operation of the DC/DC converter 6, to supply power from the rectifier 5 to the electric vehicle 20 via the overhead line 14, and to charge the power storage device 23 incorporated in the electric vehicle 20. Accordingly, the operating ratio of the charging apparatus 1 can be improved and also unnecessary waiting time for charging can be reduced.

### Second embodiment.

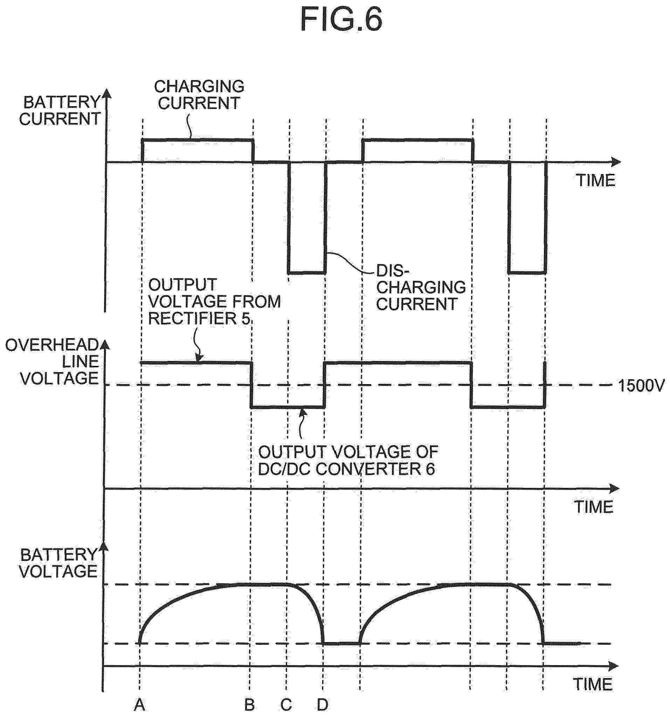

It has been explained in the first embodiment that when the power storage device 23 incorporated in the electric vehicle 20 is to be charged, an output voltage of the DC/DC converter 6 is set higher than that of the rectifier 5 to reversely apply a voltage to the rectifier 5, thereby stopping an output of the rectifier 5. In contrast, in a second embodiment, when the power storage device 23 of the electric vehicle 20 is to be charged, the AC circuit breaker 3 is opened and the output voltage of the DC/DC converter 6 is set lower than that of the rectifier 5, which is explained with reference to FIG. 6. FIG. 6 is an example of a charging/discharging pattern of the power storage device 7 according to the second embodiment. The charging apparatus 1 according to the second embodiment has identical or equivalent configurations to those of the first embodiment and explanations thereof will be omitted.

In FIG. 6, the respective periods from A to D are identical to those in FIG. 3. That is, a period from A to B is a charging control period and a period from B to D is a discharging-controllable period. In the discharging-controllable period from B to D, a period from B to C is a discharging waiting period and a period from C to D is a discharging control period. In the charging control period from A to B, an overhead line voltage is an output voltage of the rectifier 5 (for example, a predetermined voltage higher than the rated voltage of 1500 volts). The DC/DC converter 6 performs a step-down operation and performs constant current discharging of the power storage device 7 using the DC power supplied from the rectifier 5.

When the operation shifts from the charging control period from A to B to the discharging waiting period from B to C, that is, when the DC/DC converter 6 becomes a discharging-controllable state, the AC circuit breaker 3 is opened and the overhead line voltage becomes an output voltage of the DC/DC converter 6 (for example, a predetermined voltage lower than the rated voltage of 1500 volts).

When the electric vehicle 20 stops at a station or the rail yard and starts charging, the operation shifts from the discharging waiting period from B to C to the discharging control period from C to D. The DC/DC converter 6 performs rapid discharging with a large current and in a short time. When the discharging starts, the output voltage of the DC/DC converter 6 is reduced. Accordingly, the DC/DC converter 6 executes a constant voltage control so that the output voltage is not reduced. When the electric vehicle 20 starts charging, that is, along with shifting from the discharging waiting period from B to C to the discharging control period from C to D, a control of closing the AC circuit breaker 3 can be executed. By executing such a control, the power storage device 23 incorporated in the electric vehicle 20 can be charged using outputs of both the rectifier 5 and the DC/DC converter 6, which reduces the charging time. Because whether the side of the charging apparatus 1 is in a discharging-controllable state can be determined by the fact that the overhead line voltage is equal to or lower than a predetermined value in the discharging waiting period from B to C, it is possible to execute the control of closing the AC circuit breaker 3 in the discharging control period from C to D without any problem.

As explained above, according to the charging apparatus of the second embodiment, when the power storage device 23 incorporated in the electric vehicle 20 is to be charged, a period during which the AC circuit breaker 3 is opened is provided immediately before charging to stop an output of the rectifier 5, and an output voltage of the DC/DC converter 6 is set lower than that of the rectifier 5. According to the present embodiment, the DC circuit breaker provided in the technology described in Patent Literature 1 can be omitted, and further downsizing, lightening, and cost reduction, and higher reliability of the apparatus can be achieved.

According to the charging apparatus of the second embodiment, because the output voltage of the DC/DC converter 6 is set lower than that of the rectifier 5 when preparation of the power storage device 7 incorporated in the charging apparatus 1 is completed, it is possible to determine whether the side of the charging apparatus 1 is in a discharging-controllable state only based on a level (a magnitude) of the overhead line voltage. According to the present embodiment, it is possible to determine the preparation state of the charging apparatus 1 from the electric vehicle 20 without providing a special interface between the charging apparatus 1 and the electric vehicle 20.

When the electric vehicle 20 enters a station or the rail yard using the power of the power storage device 23 as a drive source with the pantograph 21 being lowered and stops, the pantograph 21 then can be raised to check the level (the magnitude) of the overhead line voltage, whereby whether the side of the charging apparatus 1 is in the discharging-controllable state can be determined on the side of the electric vehicle 20.

According to the present embodiment, information of the overhead line voltage can be displayed on the display operation screen 31 of the control unit 10. Accordingly, when a display device that displays the information of the overhead line voltage is placed at a location where the display device can be viewed from a stop position of the electric vehicle 20, the state of the charging apparatus 1 can be determined without executing a control of raising the pantograph 21.

According to the charging apparatus of the second embodiment, in a case where charging of the power storage device 7 is not completed or where the SOC of the power storage device 7 is degraded when the electric vehicle 20 stops at a station or the rail yard, it is possible to stop the operation of the DC/DC converter 6, to supply power from the rectifier 5 to the electric vehicle 20, and to charge the power storage device 23 incorporated in the electric vehicle 20. Therefore, the operating ratio of the apparatus can be improved and unnecessary waiting time for charging can be reduced.

The configurations described in the first and second embodiments are only exemplary configurations of the present invention. It is needless to mention that the configurations can be combined with other well-known technology and can be configured while modifying them without departing from the scope of the invention, such as omitting a part of the configurations.

While the case where the present invention is applied to a railway system has been explained above as an example, it is needless to mention that the present invention can be used in other movable bodies having a power storage device incorporated therein, such as an automobile, a motorcycle, a bicycle, a ship, and an aircraft, as well as in the field of a system in which a movable body stops at a particular location.

### Industrial Applicability

As described above, the present invention is useful as a charging apparatus and a power supply system that can achieve further downsizing, lightening, and cost reduction, and higher reliability of the apparatus. Reference Signs List

- 1: charging apparatus
- 2: AC power
- 3: AC circuit breaker
- 4: transformer
- 5: rectifier
- 6, 22: DC/DC converter
- 7, 23: power storage device
- 8: first current detector
- 9: first voltage detector
- 10: control unit
- 11: second current detector
- 12: second voltage detector
- 14: overhead line
- 15: rail
- 20: electric vehicle
- 21: pantograph
- 24: inverter
- 25: motor
- 26: wheel
- 31: display/operation screen
- 32: power-receiving control unit
- 33: DC/DC-converter control unit
- 41: sequence processing unit
- 42: control-target computation unit
- 43: voltage control unit
- 44: control-system switching unit
- 45: conduction-ratio computation unit
- 46: PWM circuit
- 51: operation enable signal
- 52: charging/discharging switching signal
- 53: first current command
- 54: target voltage
- 55: second current command
- 56: conduction-ratio command
- 57, 58: PWM signal
- 70: power receiving unit
- 80: charging control device
- 90: vehicle system

## Claims

1. A charging apparatus (1) comprising:
a power receiving unit (70) that includes a rectifier (5) at an output stage, receives AC power (2), and is configured to convert the AC power (2) into DC power, wherein the power receiving unit (70) includes an AC circuit breaker (3);
a power storage device (7) that has DC power stored therein;
a DC/DC converter (6) that is configured to execute a bidirectional power-flow control including a control of charging to the power storage device (7) by using an output of the rectifier (5) and a control of discharging from the power storage device (7); and
a control unit (10) that is configured to control operations of the power receiving unit (70) and the DC/DC converter (6), wherein
an output voltage of the rectifier (5) at a time of the control of charging to the power storage device (7) is higher than an output voltage of the DC/DC converter (6) that is applied to an output terminal of the rectifier (5) at a time of the control of discharging from the power storage device (7), and
wherein the control unit (10) is configured to determine a charging state of the power storage device (7); switch the DC/DC converter (6) from a charging control state to a discharging-controllable state including a discharging waiting period and a discharging control period when determining that the power storage device (7) is in a full charge state; and open the AC circuit breaker (3) to interrupt received power at a time of the discharging waiting period of the power storage device (7), and
wherein the output voltage of the DC/DC converter (6) is set lower than that of the rectifier (5) when charging of the power storage device (7) is completed.

2. The charging apparatus (1) according to claim 1, wherein the power receiving unit (70) includes an AC circuit breaker (3) and the control unit (10) is configured to open the AC circuit breaker (3) to interrupt received power at the time of the control of discharging the power storage device (7).

3. The charging apparatus (1) according to claim 1, wherein the power receiving unit includes an AC circuit breaker (3) and the control unit is configured to open the AC circuit to supply the received power at the time of the control of discharging the power storage device (7).

4. The charging apparatus (1) according to claim 2 or 3, wherein the control unit (10) includes a charging control system that is configured to perform constant current charging to the power storage device (7) using an output of the rectifier (5), and a discharging control system that is configured to discharge stored power in the power storage device (7) to perform constant voltage charging to another power storage device (23) that is externally provided.

5. The charging apparatus (1) according to claim 4, wherein the control unit (10) at least includes
a control-target computation unit (42) that is configured to generate a first current command (53) that is a command value of a charging current to the power storage device (7) and a target voltage that is a target value of a voltage applied when the another power storage device (23) is to be charged,
a voltage control unit (43) that is configured to generate a second current command (55) that is a command value of a current for maintaining an application voltage applied to an output terminal of the rectifier (5) at a constant value based on a difference between the target voltage and the application voltage,
a conduction-ratio computation unit (45) that is configured to compute a conduction ratio of a switching element included in the DC/DC converter (6), and
a control-system switching unit (44) that is configured to switch a control system of the control unit (10) to either the charging control system or the discharging control system, and
when the control system is switched to the charging control system, an output of the control-target computation unit (42) is input to the conduction-ratio computation unit (45), and
when the control system is switched to the discharging control system, the output of the control-target computation unit (42) is input to the voltage control unit (43), and an output of the voltage control unit (43) is input to the conduction-ratio computation unit (45).

## Patentansprüche

1. Ladeeinrichtung (1), Folgendes aufweisend:
eine Energieaufnahmeeinheit (70), die einen Gleichrichter (5) an einer Ausgangsstufe enthält, Wechselstromenergie (2) aufnimmt und dazu ausgelegt ist, die Wechselstromenergie (2) in Gleichstromenergie umzuwandeln, wobei die Energieaufnahmeeinheit (70) einen Wechselstromleistungsschalter (3) enthält;
eine Energiespeichervorrichtung (7), die in sich Gleichstromenergie gespeichert hat;
einen Gleichstrom/Gleichstrom-Wandler (6), der dazu ausgelegt ist, eine bidirektionale Energieflusssteuerung durchzuführen, die eine Steuerung eines Ladens der Energiespeichervorrichtung (7) unter Verwendung eines Ausgangs des Gleichrichters (5) und eine Steuerung eines Entladens der Energiespeichervorrichtung (7) umfasst; und
eine Steuereinheit (10), die dazu ausgelegt ist, Betriebsabläufe der Energieaufnahmeeinheit (70) und des Gleichstrom/Gleichstrom-Wandlers (6) zu steuern, wobei
eine Ausgangsspannung des Gleichrichters (5) zu einem Zeitpunkt der Steuerung des Ladens der Energiespeichervorrichtung (7) höher ist als eine Ausgangsspannung des Gleichstrom/Gleichstrom-Wandlers (6), die an einem Ausgangsanschluss des Gleichrichters (5) zu einem Zeitpunkt der Steuerung des Entladens der Energiespeichervorrichtung (7) anliegt, und
wobei die Steuereinheit (10) dazu ausgelegt ist, einen Ladezustand der Energiespeichervorrichtung (7) zu bestimmen; den Gleichstrom/Gleichstrom-Wandler (6) von einem Ladesteuerungszustand in einen eine Entladung steuerbaren Zustand umzuschalten, der eine Entladewarteperiode und eine Entladesteuerungsperiode umfasst, wenn bestimmt wird, dass sich die Energiespeichervorrichtung (7) in einem vollen Ladezustand befindet; und den Wechselstromleistungsschalter (3) zu öffnen, um eine Energiesaufnahme zu einem Zeitpunkt der Entladewarteperiode der Energiespeichervorrichtung (7) zu unterbrechen, und
wobei die Ausgangsspannung des Gleichstrom/Gleichstrom-Wandlers (6) bei Abschluss des Ladens der Energiespeichervorrichtung (7) niedriger eingestellt ist als diejenige des Gleichrichters (5).

2. Ladeeinrichtung (1) nach Anspruch 1, wobei die Energieaufnahmeeinheit (70) einen Wechselstromleistungsschalter (3) enthält und die Steuereinheit (10) dazu ausgelegt ist, den Wechselstromleistungsschalter (3) zu öffnen, um eine Energieaufnahme zum Zeitpunkt der Steuerung des Endladens der Energiespeichervorrichtung (7) zu unterbrechen.

3. Ladeeinrichtung (1) nach Anspruch 1, wobei die Energieaufnahmeeinheit einen Wechselstromleistungsschalter (3) enthält und die Steuereinheit dazu ausgelegt ist, den Wechselstromkreis zu öffnen, um eine Energieaufnahme zum Zeitpunkt der Steuerung des Endladens der Energiespeichervorrichtung (7) bereitzustellen.

4. Ladeeinrichtung (1) nach Anspruch 2 oder 3, wobei die Steuereinheit (10) ein Ladesteuerungssystem, das dazu ausgelegt ist, ein Konstantstromladen der Energiespeichervorrichtung (7) unter Verwendung eines Ausgangs des Gleichrichters (5) durchzuführen, und ein Entladesteuerungssystem enthält, das dazu ausgelegt ist, in der Energiespeichervorrichtung (7) gespeicherte Energie zu entladen, um ein Konstantspannungsladen einer anderen Energiespeichervorrichtung (23) durchzuführen, die extern vorgesehen ist.

5. Ladeeinrichtung (1) nach Anspruch 4, wobei die Steuereinheit (10) zumindest aufweist:
eine Steuerzielberechnungseinheit (42), die dazu ausgelegt ist, einen ersten Strombefehl (53), der ein Befehlswert eines Ladestroms für die Energiespeichervorrichtung (7) ist, und eine Zielspannung zu generieren, die ein Zielwert einer Spannung ist, die anliegt, wenn die andere Energiespeichervorrichtung (23) geladen werden soll,
eine Spannungssteuereinheit (43), die dazu ausgelegt ist, einen zweiten Strombefehl (55), der ein Befehlswert eines Stroms ist, um eine Anlegespannung, die an einem Ausgangsanschluss des Gleichrichters (5) anliegt, auf einem konstanten Wert zu halten, auf Grundlage eines Unterschieds zwischen der Zielspannung und der Anlegespannung zu generieren,
eine Leitungsverhältnisberechnungseinheit (45), die dazu ausgelegt ist, ein Leitungsverhältnis eines im Gleichstrom/Gleichstrom-Wandler (6) enthaltenen Schaltelements zu berechnen, und
eine Steuersystemschalteinheit (44), die dazu ausgelegt ist, ein Steuersystem der Steuereinheit (10) entweder auf das Ladesteuerungssystem oder das Entladesteuerungssystem zu schalten, und
wenn das Steuersystem auf das Ladesteuerungssystem geschaltet ist, ein Ausgang der Steuerzielberechnungseinheit (42) in die Leitungsverhältnisberechnungseinheit (45) eingegeben wird, und
wenn das Steuersystem auf das Entladesteuerungssystem geschaltet ist, der Ausgang der Steuerzielberechnungseinheit (42) in die Spannungssteuereinheit (43) eingegeben wird, und ein Ausgang der Spannungssteuereinheit (43) in die Leitungsverhältnisberechnungseinheit (45) eingegeben wird.

## Revendications

1. Appareil de charge (1) comprenant :
une unité de réception de puissance (70) qui inclut un redresseur (5) au niveau d'un étage de sortie, reçoit de la puissance CA (2), et est configurée pour convertir la puissance CA (2) en puissance CC, sachant que l'unité de réception de puissance (70) inclut un disjoncteur CA (3) ;
un dispositif de stockage de puissance (7) dans lequel est stockée de la puissance CC ;
un convertisseur CC/CC (6) qui est configuré pour exécuter une commande de flux de puissance bidirectionnel incluant une commande de charge du dispositif de stockage de puissance (7) moyennant une sortie du redresseur (5) et une commande de décharge depuis le dispositif de stockage de puissance (7) ; et
une unité de commande (10) qui est configurée pour commander des opérations de l'unité de réception de puissance (70) et du convertisseur CC/CC (6), sachant que
une tension de sortie du redresseur (5) à un moment de la commande de charge vers le dispositif de stockage de puissance (7) est plus élevée qu'une tension de sortie du convertisseur CC/CC (6) qui est appliquée à une borne de sortie du redresseur (5) à un moment de la commande de décharge depuis le dispositif de stockage de puissance (7), et
sachant que l'unité de commande (10) est configurée pour déterminer un état de charge du dispositif de stockage de puissance (7) ; commuter le convertisseur CC/CC (6) d'un état de commande de charge à un état commandable de décharge incluant une période d'attente de décharge et une période de commande de décharge lorsqu'on détermine que le dispositif de stockage de puissance (7) est dans un état de pleine charge ; et ouvrir le disjoncteur CA (3) pour interrompre de la puissance reçue à un moment de la période d'attente de décharge du dispositif de stockage de puissance (7), et
sachant que la tension de sortie du convertisseur CC/CC (6) est réglée à un niveau plus bas que celle du redresseur (5) lorsque la charge du dispositif de stockage de puissance (7) est achevée.

2. L'appareil de charge (1) selon la revendication 1, sachant que l'unité de réception de puissance (70) inclut un disjoncteur CA (3) et l'unité de commande (10) est configurée pour ouvrir le disjoncteur CA (3) pour interrompre de la puissance reçue au moment de la commande de décharge du dispositif de stockage de puissance (7).

3. L'appareil de charge (1) selon la revendication 1, sachant que l'unité de réception de puissance inclut un disjoncteur CA (3) et l'unité de commande est configurée pour ouvrir le circuit CA pour fournir la puissance reçue au moment de la commande de décharge du dispositif de stockage de puissance (7).

4. L'appareil de charge (1) selon la revendication 2 ou 3, sachant que l'unité de commande (10) inclut un système de commande de charge qui est configuré pour effectuer une charge en courant constant vers le dispositif de stockage de puissance (7) moyennant une sortie du redresseur (5), et un système de commande de décharge qui est configuré pour décharger de la puissance stockée dans le dispositif de stockage de puissance (7) pour effectuer une charge en tension constante vers un autre dispositif de stockage de puissance (23) qui est prévu en externe.

5. L'appareil de charge (1) selon la revendication 4, sachant que l'unité de commande (10) inclut au moins
une unité de calcul de cible de commande (42) qui est configurée pour générer une première consigne de courant (53) qui est une valeur de consigne d'un courant de charge vers le dispositif de stockage de puissance (7) et une tension cible qui est une valeur cible d'une tension appliquée lorsque l'autre dispositif de stockage de puissance (23) doit être chargé,
une unité de commande de tension (43) qui est configurée pour générer une deuxième consigne de courant (55) qui est une valeur de consigne d'un courant servant à maintenir une tension d'application appliquée à une borne de sortie du redresseur (5) à une valeur constante sur la base d'une différence entre la tension cible et la tension d'application,
une unité de calcul de rapport de conduction (45) qui est configurée pour calculer un rapport de conduction d'un élément de commutation inclus dans le convertisseur CC/CC (6), et
une unité de commutation de système de commande (44) qui est configurée pour commuter un système de commande de l'unité de commande (10) soit vers le système de commande de charge soit vers le système de commande de décharge, et
lorsque le système de commande est commuté vers le système de commande de charge, une sortie de l'unité de calcul de cible de commande (42) est entrée dans l'unité de calcul de taux de conduction (45), et
lorsque le système de commande est commuté vers le système de commande de décharge, la sortie de l'unité de calcul de cible de commande (42) est entrée dans l'unité de commande de tension (43), et une sortie de l'unité de commande de tension (43) est entrée dans l'unité de calcul de taux de conduction (45).
